# EUROPÄISCHE PATENTSCHRIFT

(11) **EP 3 328 699 B1**
(45) Veröffentlichungstag und Bekanntmachung des Hinweises auf die Patenterteilung: **01.04.2020**
(21) Anmeldenummer: 16741273.3
(22) Anmeldetag: 13.07.2016
(51) Int. Cl.: B60T 13/74

(54) **FESTSTELLBREMSBETÄTIGUNGSVERFAHREN FÜR EIN ELEKTROMOTORISCHES KRAFTFAHRZEUGFESTSTELLBREMSSYSTEM**
METHOD FOR ACTUATING AN ELECTRIC PARKING BRAKE
MÉTHODE D'ACTUATION D'UN FREIN DE PARQUAGE ÉLECTRIQUE

(30) Priorität: 31.07.2015 DE 102015214715
(43) Veröffentlichungstag der Anmeldung: 06.06.2018
(73) Patentinhaber: Continental Teves AG & Co. OHG, 60488 Frankfurt am Main (DE)
(72) Erfinder: MARON, Christof, 61250 Usingen (DE); SCHNEIDER, Heinz-Anton, 65527 Niedernhausen (DE)
(86) Internationale Anmeldenummer: PCT/EP2016/066599
(87) Internationale Veröffentlichungsnummer: WO 2017/021114

(56) Entgegenhaltungen:
- EP-B1- 0 966 376
- WO-A1-03/100282
- CN-A- 103 895 518
- DE-A1-102007 035 541
- DE-A1-102012 201 579

## Beschreibung

Es ist ein elektromotorisch betätigter Radbremsaktuator bekannt, der ein vorgespanntes Federelement sowie Trommelbremssystem vom Typ Duo-Servo für ein Kraftfahrzeug beinhaltet, und ein Betriebsverfahren erfordert, das zur Ermittlung bestimmter Werte der Feststellkraft mit Hilfe vom Federelement signifikante Änderungen der Stromaufnahme des elektromotorischen Aktuators beim Zuspannen und beim Lösen detektiert bzw. aufspürt (DE 10 2007 035 541 A1).

Das Abstellen eines Fahrzeugs mit heißer Radbremse, insbesondere an einem Hang, kann infolge Abkühlung zu Zuspannkraftänderungen führen. Scheibenbremsen erfahren dabei generell einen Zuspannkraftverlust, wohingegen Trommelbremsen grundsätzlich einer Zuspannkraftsteigerung unterliegen. Bei den Trommelbremsen kommt zusätzlich erschwerend hinzu, dass diese aus konstruktiven Gründen über drehrichtungsabhängig unterschiedliche Selbstverstärkungseffekte verfügen können, was sich beim Abkühlen der Radbremse in Hinblick auf die Zuspannkraftänderung in umgekehrter Richtung bemerkbar macht.

Zudem sind bei Duo-Servo-Trommelbremssystemen besondere Stick-Slip-Effekte bekannt, bei denen die Bremsschuhe an der Bremstrommel zeitweilig anhaften oder rutschen. Diese Sachverhalte können unerwünschte Unstetigkeiten in der Stromdetektion verursachen, was eine Filterung notwendig macht.

Um eine quasi elastische Krafteinwirkung der Bremsschuhe auf die Bremstrommel in Verbindung mit einer umfassenden Überwachungsfunktion zu realisieren, ist daher eine spezielle Zentralstelleinheit mit Betätigungszug und zwei Anlenkungen an Radbremsen bekannt, bei denen die federelastische Längung vom Betätigungszug quasi als reversibler Energiespeicher von der zentralen Stelleinheit ausgenutzt wird (EP 966 376 B1). Jedoch sind bei derartigen Anlagen zwei Sensoren zur Überwachung vom Betätigungszug sowie entsprechend umfangreiche Signalverarbeitungen in einer Steuereinheit vorgeschrieben.

Um unerwünschtes Entbremsen zu verhindern, wurde teilweise auch schon vorgeschlagen, einen Fahrzeugzustand bzw. den Zustand der Radbremse zumindest innerhalb definierter Zeitabschnitte nach dem Abstellen - die sogenannte Überlaufzeit - durch eine elektronische Steuereinheit automatisch also fahrerunabhängig zu überwachen und bei Bedarf die Feststellbremsaktuatorik automatisch nachzuspannen. Es versteht sich von selbst, dass dieser Automatikbetrieb die elektrische Stromversorgung, also das Fahrzeugbordnetz, zusätzlich beansprucht, was eigentlich nur in Verbindung mit einem unbegrenzten elektrischen Energievorrat toleriert werden kann.

Die vorliegende Erfindung beruht daher auf der Aufgabe, unter Verzicht auf Kraft- oder Wegmessensorik das stromlose Abstellen eines Kraftfahrzeuges mit elektrischer Parkbremse noch zuverlässiger und günstiger als bisher sicherzustellen.

Zur Lösung des Problems wird erfindungsgemäß ein elektronisch gesteuertes oder geregeltes Feststellbremsbetätigungsverfahren vorgeschlagen, wobei a) die Steuereinheit im Seilspannprozess unter fortgesetzter Beobachtung vom Strombedarf immer einen Primärspannvorgang vom Radbremsaktuator ausführt und terminiert, wobei die Seilzugspannung bei Terminierung vom Primärspannvorgang immer mit geringerer Seilzugspannung als einer vordefinierten Mindestseilzugspannung korreliert, dass b) die Steuereinheit nach der Terminierung über einen zeitlich limitierten Zeitraum, eine Stillstandsüberprüfung vom Kraftfahrzeug mit Hilfe von gemessenen oder ermittelten Fahrzeugsensordaten ausführt, dass c) die Steuereinheit das Ergebnis der Stillstandsüberprüfung anhand von abgespeicherten Kriterien bewertet, und wobei d) die Steuereinheit nur im Anschluss an ein mangelbehaftet oder unzureichend bewertetes Resultat von der Stillstandsüberprüfung automatisch einen Sekundärspannvorgang unter erneuter Aktuatorbestromung sowie Strombeobachtung auslöst, und die Bestromung im Sekundärspannvorgang mit mindestens etwa 90% von der vorgegebenen Mindestseilzugspannung korreliert, bevor e) eine finale Terminierung der Bestromung erfolgt.

Erfindungsgemäß wird das Abstellen in vorteilhafter Weise stets bedarfsgerecht gesteuert bzw. geregelt vorgenommen. Gleichzeitig wird die elektrische Bordnetzbeanspruchung wie auch die mechanische Beanspruchung von Komponenten ohne Sicherheitsdefizit reduziert. Vorteilhafterweise korreliert dabei die Seilzugspannung bei Terminierung des Primärspannvorgangs mit mindestens etwas 60 % von der vorgegebenen Mindestseilzugspannung.

In weiterhin vorteilhafter Ausgestaltung der vorliegenden Erfindung ist zur Absicherung vom Abstellen vorgesehen, dass die Steuereinheit nach dem Sekundärspannvorgang unter terminierter Bestromung vom Radbremsaktuator eine sekundäre Stillstandüberprüfung vom Kraftfahrzeug über einen zeitlich limitierten Zeitraum hinweg ausführt. Demzufolge wird ein Sicherheitsgewinn erzielt, indem Fehler beim Abstellen automatisch detektiert und durch außergewöhnliches Nachspannen automatisch eliminiert werden können.

Der Eliminierung von Fehlern beim Abstellen dient es, wenn die Steuereinheit nach einem mangelbehaftet oder unzureichend bewerteten Ergebnis von der sekundären Stillstandsüberprüfung automatisch einen Tertiärspannvorgang unter erneuter Aktuatorbestromung sowie Strombeobachtung auslöst, und wobei die Bestromung im Tertiärspannvorgang mit mindestens etwa 120 % von der Mindestseilzugspannung korreliert.

Sowohl die softwaretechnische Handhabung als auch das industrielle Freigabewesen werden rationalisiert, wenn die Steuereinheit in einem gesondert abgesicherten Programmodul wenigstens einen Fahrzeugsensorsolldatensatz als fixes Bewertungskriterium abgespeichert aufweist, welcher mit wenigstens einem sicheren Fahrzeugabstellprofil vom gattungsgemäßen Kraftfahrzeug korrelieren, und dass das Programmmodul automatisch gemessene oder erfasste Fahrzeugsensordaten vom Kraftfahrzeug mit dem oder mit den gespeicherten Fahrzeugsensorsolldatensatz/-sätzen zur Stillstandsüberprüfung vergleicht.

Zur rationellen Anpassung an eine vorgegebene Fahrzeugarchitektur trägt es bei, wenn ein abgespeicherter Fahrzeugsensorsolldatensatz, und/oder die ausgeführte Stillstandsüberprüfung, wenigstens eine Neigungswinkelinformation, und eine mit der Neigungswinkelinformation korrelierte Raddrehinformation beinhaltet.

Es wird als notwendig sowie hinreichend angesehen, wenn der zeitlich limitierte Zeitraum zur Stillstandüberprüfung wenigstens etwa 70ms bei einer Zykluszeit in der Steuereinheit von etwa 7 ms beträgt. Demzufolge kann es die Erfindung in Abhängigkeit von Konstruktion, Zustand und Pflege von der angeschlossenen Peripherie zuverlässig ermöglichen, das Abstellen vom Fahrzeug im Anschluss an einen Bremsbetätigungswunsch, bzw. im Anschluss an Fremdbetätigung innerhalb von weniger als drei Sekunden - einschließlich der Übergabe in die stomlose Selbsthemmung - sicher, zuverlässig und rationell abzuschließen.

Der jeweils zeitlich limitierte Zeitraum zur Stillstandüberprüfung vom Kraftfahrzeug kann dabei beispielhaft inetwa eine Sekunde beanspruchen, und wobei die Steuereinheit nach mangelhafter Wertung der Stillstandsüberprüfung, also nach Eingang von "unerwünschten" Raddrehinformationen im limitierten Zeitraum, automatisch entweder den Sekundär- oder den Tertiärspannvorgang ausführen lässt.

Für den seltenen Fehlerfall, dass ein Tertiärspannvorgang ohne Erfolg ausgeführt worden ist, kann an den Fahrzeugführer und/ oder an andere Adressaten wie beispielsweise an benachbarte Verkehrsteilnehmer, Passanten oder auch Hilfskräfte insbesondere auf drahtlosem Wege, eine elektronische Fehlermeldung über einen unzureichend abgesicherten Abstellvorgang vom Fahrzeug abgegeben werden. Durch diese Maßnahme kann von außerhalb des Fahrzeugs Gegenmaßnahme beziehungsweise Hilfestellung gegeben werden, und benachbarte Verkehrteilnehmer erhalten dadurch beispielsweise Gelegenheit, hinreichend schnell Gegenmaßnahmen zur Vermeidung von Folgeschäden durch nicht sicher abgestellte Fahrzeuge vorzusehen.

Es wird als besonders vorteilhaft angesehen, wenn eine abgespeicherte Mindestseilzugspannung in Abhängigkeit vom gemessenen oder erfassten Fahrzeugbeladungszustand (Fahrzeugzuladung und/oder Anhängelast) unterschiedlich angepasst vorgesehen ist.

Zudem können wenigstens zwei unterschiedlich abgespeicherte Mindestseilzugspannungen für die Trommelbremsen einer gemeinsamen Fahrzeugachse in Abhängigkeit von deren Platzierung, wie insbesondere Selbstverstärkungseffekt beziehungsweise Drehstellung, und oder abhängig von deren Stellung zu dem jeweiligen Hang, also hangauf, hangab, talweisend, bergweisend, variabel definiert vorgesehen sein.

Die Erfindung wird anhand der Zeichnung in der eine Ausführungsform der Erfindung dargelegt ist, näher erläutert. In der Zeichnung zeigt jeweils schematisch:

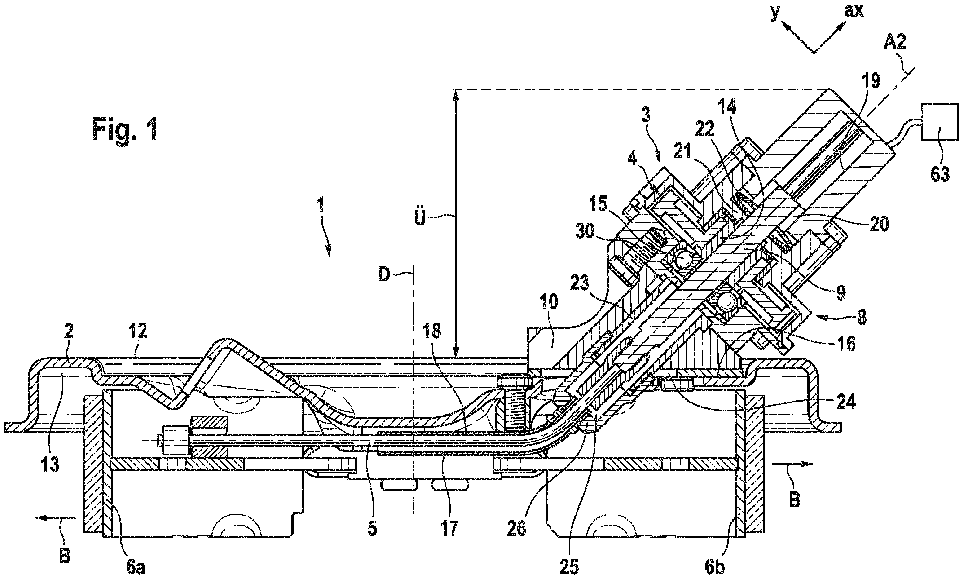

Fig. 1 exemplarisch eine aus der DE 10 2012 201 579 A1 bekannte sowie sensorlose Radbremsaktuatorik mit kurzem Zugseil, welche geeignet ist, mit einem erfindungsgemäßen Feststellbremsbetätigungsverfahren angesteuert zu werden, und

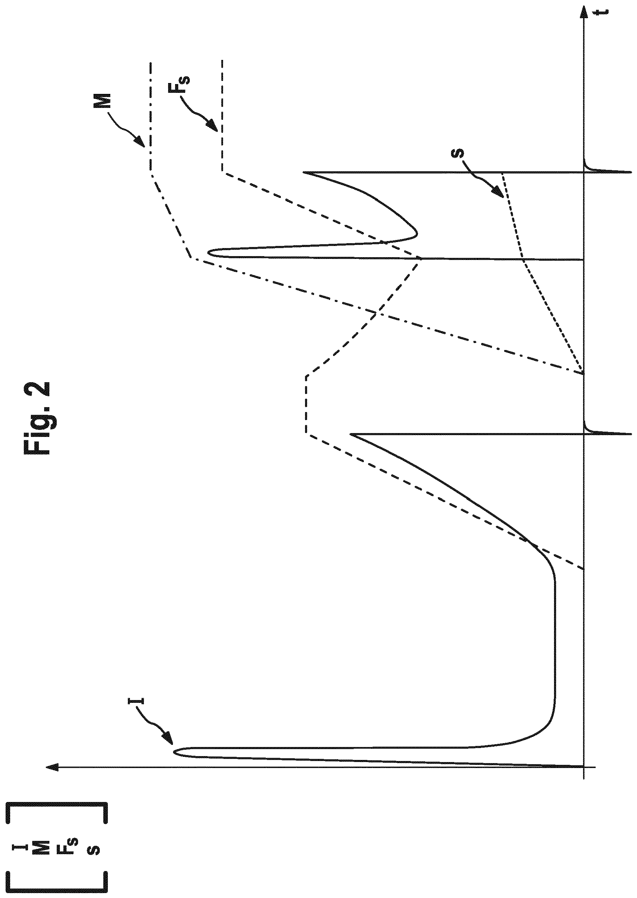

Fig. 2 eine qualitative Skizze der synchronen Verläufe zur Darstellung von Aktuatorstrombedarf I, Bremsmoment M, Seilspannkraft Fs und Fahrzeugrollweg s jeweils über der Zeit t beim erfindungsgemäßen Betätigungeverfahren.

Erfindungsgemäß ist wenigstens ein Initialspannvorgang bzw. Primärspannvorgang vom Zugseil vorgesehen. Danach kann prinzipiell ein weiterer, Sekundärspannvorgang bzw. noch ein zusätzlicher Tertiärspannvorgang am Zugseil durchgeführt werden.

Ein beispielhafter Spannprozess einer elektrischen Feststellbremse geschieht wie folgt. Ein erster Primär-/Initialspannvorgang, endet bei einem Niveau von vorzugsweise 80 Prozent der benötigten Zugkraft.
Eine unerwünschte Bewegung des Fahrzeugs wird während und nach dem Primärspannvorgang feinfühlig überwacht und Bewertet. Wenn im Rahmen der Stillstandsüberwachung eine unpassende Bewegung des Fahrzeugs erfasst wird, welche beispielsweise mit einem üblichen, vorbekannten, abgespeicherten Bewegungsprofil eines Fahrzeugs mit betätigter Duo-Servo-Bremse bei einem definierten Neigungswinkel nicht entspricht, wird am elektrischen Aktuator ein zweiter, Sekundärspannvorgang ausgelöst. Dadurch wird eine definierte, dem festgestellten Neigungswinkel bzw. dem Fahrzeugzustand passend zugeordnete erhöhte Zugkraft am Zugseil aufgebracht. Beispielhaft korreliert die Spannung im Sekundärspannvorgang mit 90 % einer vorgegebenen Mindestspannung.

Wird beispielsweise eine Fahrzeugbewegung nach einem Primärspannvorgang festgestellt, so ist oft nicht eindeutig, ob die Bremsschuhe noch an der Bremstrommel anhaften oder nicht und ob es mit einer Verringerung des Haftmoments gerechnet werden muss. Die Reaktionszeit eines üblichen elektrischen Aktuators beträgt jedoch üblicherweise mindestens etwa 70ms. In Abhängigkeit von der Steifigkeit des Gesamtsystems kann in 70ms die Zugkraft am Zugseil zum Teil erheblich über das eigentlich benötigte Maß erhöhen werden. Daher ist jeweils auf einen zeitlicher und kraftmäßig ausreichenden Abstand zwischen Primär-, Sekundär- bzw. Tertiärspannvorgang zu achten.

Wenn innerhalb einer definierten Zeitspanne, von beispielsweise etwa einer Sekunde nach der Durchführung eines Primärspannvorgangs keine unerwünschte Fahrzeugbewegung und keine Betätigung der Betriebsbremse registriert werden, erfolgt eine Terminierung der Bestromung, also stromlose Selbsthemmung. Es ist jedoch auch möglich, dass am Aktuator zur zusätzlichen Absicherung ein Sekundärspannvorgang ausgelöst wird, der eine nochmals erhöhte Zugspannung am Zugseil aufbringt.

Durch die Erfindung wird eine bedarfsgerechte Dosierung der Zuspannkraft beim Abstellen ermöglicht. Durch die bedarfsgerechte Betätigung muss ein Aktuator nicht ständig sowie meist unnötig mit Überlast betätigt werden oder sogar überdimensioniert ausgelegt sein. Mit anderen Worten ermöglicht es die Erfindung erstmals, einen Aktuator kleiner also weniger leistungsfähig dimensioniert auszulegen. Dadurch wird die Gefahr einer Beschädigung infolge Überlastung oder Werstoffermüdung sinnvoll verringert.

Es ist möglich, die Anzahl der einzelnen Zuspannvorgänge zu reduzieren, indem mehrere, den Neigungswinkeln bzw. der Fahrzeugzuladung zugeordnete Zuspannkräfte/spannungen vorgegeben werden. Dadurch werden die beteiligten Hardwarekomponenten geschont bzw. eine Reaktionszeit bis zur spürbaren Haltewirkung reduziert.

Das erfindungsgemäße Feststellbremssystem ermöglicht eine Verwendung von standardisierten Komponenten einer konventionellen mechanischen Duo-Servo-Bremse. Auf zusätzliche Bauteile wie insbesondere auf Elastizitäten im Sinne von einem Zuspannkraftreservoir wie bei den Federspeicherbremsen der Nutzfahrzeuge kann erfindungsgemäß verzichtet werden.

### Bezugszeichenliste:

- 1: Trommelbremsmodul
- 2: Ankerplatte
- 3: Aktuator
- 4: Getriebe
- 5: Betätigungszug
- 6a, b: Bremsbacken
- 7: Motor (unsichtbar)
- 8: Getriebegehäuse
- 9: Spindelanordnung
- 10: Adapter
- 12: Außenseite
- 13: Innenseite
- 14: Antriebsmutter
- 15: Lager
- 16: Auflagefläche
- 17: Führung
- 18: Hülle
- 20: Anschlag
- 21: Widerlager
- 22: Elastoelement
- 23: Stutzen
- 24: Durchgangsöffnung
- 25: Austrittsöffnung
- 26: Dichtungselement
- 30: Befestigungsmittel
- 63: Steuereinheit

- A2: Achse
- B: Betätigungsrichtung
- D: Drehachse
- Fs: (Seil-)Spannkraft
- I: Motorstrombedarf
- M: Bremsmoment
- s: Fahrzeugrollweg
- Ü: Überstand
- t: Zeit

## Patentansprüche

1. Feststellbremsbetätigungsverfahren für ein elektromotorisches Kraftfahrzeugfeststellbremssystem enthaltend mehrere Trommelbremsen, insbesondere vom Duo-Servo-Typ, mit elektromechanischen Radbremsaktuatoren deren Zustellbewegungen jeweils gesondert über Getriebemittel, Spreizvorrichtung und Zugseil auf Bremsschuhe jeder Trommelbremse übertragen werden, und mit elektrischen Verbindungen zwischen jedem Radbremsaktuator und einer zentralen elektronischen Steuereinheit, wobei die Steuereinheit zwecks Steuerung und/oder Regelung der Seilspannung den Strombedarf sämtlicher Radbremsaktuatoren radindividuell beobachtet sowie reguliert und nach Erkennung einer definierten, vorgegebenen Seilspannung, die Bestromung vom jeweiligen Radbremsaktuator terminiert und diesen dadurch in eine stromlose Selbsthemmung überführt, wobei die Steuereinheit zudem eine elektronische Fahrzeugsensordateninformationsverarbeitung zur Absicherung vom Fahrzeugstillstand ausführt, **dadurch gekennzeichnet, dass** a) die Steuereinheit im Seilspannprozess unter fortgesetzter Beobachtung vom Strombedarf immer einen Primärspannvorgang vom Radbremsaktuator ausführt, dessen Terminierung mit etwa 60 % einer vorgegebenen Mindestseilzugspannung korreliert, dass b) die Steuereinheit bei terminierter Bestromung vom Radbremsaktuator, über einen zeitlich limitierten Zeitraum, eine Stillstandsüberprüfung vom Kraftfahrzeug mit Hilfe von gemessenen oder ermittelten Fahrzeugsensordaten ausführt, dass c) die Steuereinheit das Ergebnis der Stillstandsüberprüfung anhand von abgespeicherten Kriterien bewertet, und wobei d) die Steuereinheit im Anschluss an ein mangelbehaftet oder unzureichend bewertetes Resultat von der Stillstandsüberprüfung automatisch einen Sekundärspannvorgang unter erneuter Aktuatorbestromung sowie Strombeobachtung auslöst, und die Bestromung im Sekundärspannvorgang mit mindestens etwa 90% von der Mindestseilzugspannung korreliert.

2. Feststellbremsbetätigungsverfahren nach Anspruch 1, **dadurch gekennzeichnet, dass** die Steuereinheit nach dem Sekundärspannvorgang bei terminierter Bestromung vom Radbremsaktuator eine sekundäre Stillstandüberprüfung vom Kraftfahrzeug über einen zeitlich limitierten Zeitraum ausgeführt.

3. Feststellbremsbetätigungsverfahren nach Anspruch 2, **dadurch gekennzeichnet, dass** die Steuereinheit nach einem mangelbehaftet oder unzureichend bewerteten Ergebnis von der sekundären Stillstandsüberprüfung automatisch einen Tertiärspannvorgang unter erneuter Aktuatorbestromung sowie Strombeobachtung auslöst, und wobei die Bestromung im Tertiärspannvorgang mit mindestens etwa 120 % von der Mindestseilzugspannung korreliert.

4. Feststellbremsbetätigungsverfahren nach einem oder mehreren der Ansprüche 1 - 3, **dadurch gekennzeichnet, dass** die Steuereinheit in einem gesondert abgesicherten Programmodul wenigstens einen Fahrzeugsensorsolldatensatz als fixes Bewertungskriterium abgespeichert aufweist, welcher mit wenigstens einem sicheren Fahrzeugabstellprofil vom gattungsgemäßen Kraftfahrzeug korrelieren, und dass das Programmmodul automatisch gemessene oder erfasste Fahrzeugsensordaten vom Kraftfahrzeug mit dem oder mit den gespeicherten Fahrzeugsensorsolldatensatz/-sätzen zur Stillstandsüberprüfung vergleicht.

5. Feststellbremsbetätigungsverfahren nach Anspruch 4, **dadurch gekennzeichnet, dass** der abgespeicherte Fahrzeugsensorsolldatensatz wenigstens eine Neigungswinkelinformation und eine damit korrelierte Raddrehinformation beinhaltet.

6. Feststellbremsbetätigungsverfahren nach einem oder mehreren der vorhergehenden Ansprüche 1-5, **dadurch gekennzeichnet, dass** der zeitlich limitierte Zeitraum zur Stillstandüberprüfung wenigstens etwa 70ms bei einer Rechenvorgangzeit der Steuereinheit von etwa 7 ms beträgt.

7. Feststellbremsbetätigungsverfahren nach einem oder mehreren der vorhergehenden Ansprüche 1-6, **dadurch gekennzeichnet, dass** der bzw. die zeitlich limitierte/ n Zeitraum/-räume wenigstens etwa eine Sekunde beträgt/-tragen, und dass die Steuereinheit nach einem mangelfreien Ergebnis der Stillstandsüberprüfung regelmäßig entweder den Sekundär- oder den Tertiärspannvorgang ausführen lässt.

8. Feststellbremsbetätigungsverfahren nach einem oder mehreren der vorhergehenden Ansprüche 1-7, **dadurch gekennzeichnet, dass** die abgespeicherte Mindestseilzugspannung in Abhängigkeit von einem gemessenen oder ermittelten Fahrzeugneigungswinkel variierbar vorgesehen ist.

9. Feststellbremsbetätigungsverfahren nach einem oder mehreren der vorhergehenden Ansprüche 1-8, **dadurch gekennzeichnet, dass** wenigstens zwei unterschiedlich abgespeicherte Mindestseilzugspannungen für die Trommelbremsen einer gemeinsamen Fahrzeugachse in Abhängigkeit von deren Platzierung, wie insbesondere Selbstverstärkungseffekt beziehungsweise Drehstellung, und oder abhängig von deren Relation zu dem jeweiligen Hang, also hangauf, hangab, talweisend, bergweisend, variabel definiert vorgesehen sind.

## Claims

1. Parking brake actuation method for an electric-motor-operated motor vehicle parking brake system containing a plurality of drum brakes, in particular of the duo-servo type, having electromechanical wheel brake actuators whose application movements are each transmitted separately to brake shoes of each drum brake via transmission means, a spreading device and a traction cable, and having electrical connections between each wheel brake actuator and a central electronic control unit, wherein the control unit observes and regulates the power demand of all the wheel brake actuators on a wheel-specific basis for the purpose of performing open-loop and/or closed-loop control of the cable tension and, after detection of a defined, preset cable tension, said control unit terminates the energization of the respective wheel brake actuator and as a result transfers said wheel brake actuator into a currentless self-locking state, wherein the control unit moreover executes electronic vehicle sensor data information processing for protecting the stationary state of the vehicle, **characterized in that** a) the control unit always executes a primary tensioning process of the wheel brake actuator in the cable tensioning process with continued observation of the power demand, the termination of which primary tensioning process correlates with approximately 60% of a preset minimum cable tension, **in that** b) when energization of the wheel brake actuator has been terminated, the control unit executes, over a chronologically limited time period, checking of the stationary state of the motor vehicle using measured or determined vehicle sensor data, **in that** c) the control unit evaluates the result of the checking of the stationary state on the basis of stored criteria, and wherein d) the control unit automatically triggers a secondary tensioning process with renewed actuator energization and observation of the current subsequent to a result of the checking of the stationary state which is evaluated as faulty or inadequate, and the energization in the secondary tensioning process correlates with at least approximately 90% of the minimum cable pull tension.

2. Parking brake actuation method according to Claim 1, **characterized in that** if the energization of the wheel brake actuator has terminated after the secondary tensioning process, the control unit executes secondary checking of the stationary state of the motor vehicle over a chronologically limited time period.

3. Parking brake actuation method according to Claim 2, **characterized in that** after a result of the secondary checking of the stationary state which is evaluated as faulty or inadequate, the control unit automatically triggers a tertiary tensioning process with renewed actuator energization and observation of the current, and wherein the energization in the tertiary tensioning process correlates with at least approximately 120% of the minimum cable pull tension.

4. Parking brake actuation method according to one or more of Claims 1-3, **characterized in that** the control unit has at least one vehicle sensor set point data set stored as a fixed evaluation criterion in a separately protected program module, which vehicle sensor set point data set correlates with at least one secure vehicle parking profile of the generic motor vehicle, and **in that** the program module automatically compares measured or acquired vehicle sensor data of the motor vehicle with the stored vehicle sensor set point data set/sets for checking of the stationary state.

5. Parking brake actuation method according to Claim 4, **characterized in that** the stored vehicle sensor set point data set includes at least one inclination angle information item and a wheel rotation information item which is correlated therewith.

6. Parking brake actuation method according to one or more of the preceding Claims 1-5, **characterized in that** the chronologically limited time period for checking of the stationary state is at least approximately 70 ms during a computing process time of the control unit of approximately 7 ms.

7. Parking brake actuation method according to one or more of the preceding Claims 1-6, **characterized in that** the chronologically limited time period/periods is/are at least approximately one second, and **in that** after a fault-free result of the checking of the stationary state the control unit regularly causes either the secondary tensioning process or the tertiary tensioning process to be executed.

8. Parking brake actuation method according to one or more of the preceding Claims 1-7, **characterized in that** the stored minimum cable pull tension is provided such that it can be varied as a function of a measured or determined vehicle inclination angle.

9. Parking brake actuation method according to one or more of the preceding Claims 1-8, **characterized in that** at least two differently stored minimum cable pull tensions for the drum brakes of a common vehicle axle are provided in a way such that they can be varied in a defined fashion as a function of their positioning, such as, in particular, a self-boosting effect or rotational position, and/or as a function of their relationship with the respective slope, that is to say uphill, downhill, pointing downhill or pointing uphill.

## Revendications

1. Procédé d'actionnement de frein de stationnement pour un système de frein de stationnement de véhicule automobile électromotorisé incluant plusieurs freins à tambour, notamment du type duo-servo, comprenant des actionneurs de frein de roue électromécaniques dont les mouvements d'approche sont respectivement transmis séparément aux sabots de frein de chacun des freins à tambour par le biais de moyens d'engrenage, d'un arrangement écarteur et d'un câble de traction, et comprenant des liaisons électriques entre chaque actionneur de frein de roue et une unité de commande centrale électronique, l'unité de commande observant et aussi régulant individuellement pour chaque roue le besoin en courant de tous les actionneurs de frein de roue en vue de commander et/ou de réguler la tension de câble et, après la reconnaissance d'une tension de câble définie prédéterminée, mettant fin à l'alimentation électrique de l'actionneur de frein de roue respectif et transférant ainsi celui-ci dans un autoblocage hors tension, l'unité de commande exécutant en plus un traitement d'informations de données de capteur de véhicule électronique en vue de sécuriser l'immobilisation du véhicule,
**caractérisé en ce que**
a) l'unité de commande, dans le processus de tension du câble sous surveillance continue du besoin en courant, effectue toujours une opération de tension primaire de l'actionneur de frein de roue dont l'achèvement est corrélé avec environ 60 % d'une tension de traction de câble minimale prédéterminée, **en ce que**
b) l'unité de commande, lorsque l'alimentation électrique de l'actionneur de frein de roue à pris fin, exécute pendant une période limitée dans le temps un contrôle de l'immobilisation du véhicule automobile à l'aide de données de capteur de véhicule mesurées ou déterminées, **en ce que**
c) l'unité de commande évalue le résultat du contrôle de l'immobilisation à l'aide de critères mémorisés, et
d) l'unité de commande, suite à un résultat évalué incorrect ou insuffisant du contrôle de l'immobilisation, déclenchant automatiquement une opération de tension secondaire avec une nouvelle alimentation électrique de l'actionneur et la surveillance du courant, et l'alimentation électrique dans l'opération de tension secondaire étant corrélée avec au moins 90 % de la tension de traction de câble minimale.

2. Procédé d'actionnement de frein de stationnement selon la revendication 1, **caractérisé en ce que** l'unité de commande, après l'opération de tension secondaire, lorsque l'alimentation électrique de l'actionneur de frein de roue a pris fin, exécute un contrôle de l'immobilisation secondaire du véhicule automobile pendant une période limitée dans le temps.

3. Procédé d'actionnement de frein de stationnement selon la revendication 2, **caractérisé en ce que** l'unité de commande, en présence d'un résultat évalué incorrect ou insuffisant du contrôle de l'immobilisation secondaire, déclenche automatiquement une opération de tension tertiaire avec une nouvelle alimentation électrique de l'actionneur et la surveillance du courant, et l'alimentation électrique dans l'opération de tension tertiaire étant corrélée avec au moins environ 120 % de la tension de traction de câble minimale.

4. Procédé d'actionnement de frein de stationnement selon une ou plusieurs des revendications 1 à 3, **caractérisé en ce que** l'unité de commande possède, dans un module de programme mémorisé séparément, au moins un jeu de données de consigne de capteur de véhicule en tant que critère d'évaluation fixe, lequel est corrélé avec au moins un profil d'arrêt sécurisé de véhicule du véhicule automobile générique, et **en ce que** le module de programme compare les données de capteur de véhicule du véhicule automobile mesurées ou acquises automatiquement avec le ou les jeu(x) de données de consigne de capteur de véhicule mémorisé(s) en vue du contrôle de l'immobilisation.

5. Procédé d'actionnement de frein de stationnement selon la revendication 4, **caractérisé en ce que** le jeu de données de consigne de capteur de véhicule mémorisé contient au moins une information d'angle d'inclinaison et une information de rotation de roue corrélée avec celle-ci.

6. Procédé d'actionnement de frein de stationnement selon une ou plusieurs des revendications précédentes 1 à 5, **caractérisé en ce que** la période limitée dans le temps pour le contrôle de l'immobilisation est au moins égale à environ 70 ms avec un temps d'opération de calcul de l'unité de commande d'environ 7 ms.

7. Procédé d'actionnement de frein de stationnement selon une ou plusieurs des revendications précédentes 1 à 6, **caractérisé en ce que** la ou les période (s) limitée (s) dans le temps est/sont au moins égale(s) à environ une seconde, et **en ce que** l'unité de commande, après un résultat sans défaut du contrôle de l'immobilisation, fait régulièrement exécuter l'opération de tension soit secondaire, soit tertiaire.

8. Procédé d'actionnement de frein de stationnement selon une ou plusieurs des revendications précédentes 1 à 7, **caractérisé en ce que** la tension de traction du câble minimale mémorisée est prévue variable en fonction d'un angle d'inclinaison du véhicule mesuré ou déterminé.

9. Procédé d'actionnement de frein de stationnement selon une ou plusieurs des revendications précédentes 1 à 8, **caractérisé en ce qu'**au moins deux tensions de traction du câble minimales mémorisées différemment pour les freins à tambour d'un essieu de véhicule commun sont prévues de manière définie variables en fonction de leur placement, comme notamment un effet d'auto-amplification ou une position de rotation, et/ou en fonction de leur relation par rapport à la pente respective, c'est-à-dire pente ascendante, pente descendante, vers la vallée, vers le sommet.
